# EUROPEAN PATENT APPLICATION

(11) **EP 4 769 674 A1**
(43) Date of publication of application: **01.07.2026**
(21) Application number: 25809934.0
(22) Date of filing: 08.04.2025
(51) Int. Cl.: H01M 10/658, H01M 10/6555, C09K 5/10, H01M 10/613, H01M 50/204

(54) **THERMAL BARRIER PAD, BATTERY PACK, AND BATTERY MODULE**

(30) Priority: 10.05.2024 KR 20240062086; 09.01.2025 KR 20250003705
(71) Applicant: LG ENERGY SOLUTION, LTD., Seoul 07335 (KR)
(72) Inventor: Kim, Sun Jae, Daejeon 34122 (KR); Kang, Ye Ran, Daejeon 34122 (KR); Yim, Sung Bin, Daejeon 34122 (KR); Lee, Jin Kyu, Daejeon 34122 (KR); Lee, Soo Ryeon, Daejeon 34122 (KR)
(74) Representative: Plasseraud IP
(86) International application number: PCT/KR2025/004740
(87) International publication number: WO 2025/234618

(57) **Abstract**

A thermal barrier pad is provided including: a porous insulation absorbing material having a first main surface and a second main surface; an endothermic solution composition absorbed in the insulation absorbing material; a heat conductive sheet covering at least one of the first main surface and the second main surface of the insulation absorbing material; and a heat dissipating pouch surrounding the insulation absorbing material and the heat conductive sheet and including a metal layer, wherein the endothermic solution composition includes: about 0.20 wt.% to about 0.45 wt.% of a surfactant; about 0.3 wt.% to about 5.0 wt.% of a thickening agent; and about 60 wt.% to about 80 wt.% of water.

## Description

### [Technical Field]

The present disclosure relates to a thermal barrier pad, a battery pack, and a battery module, and more specifically, to a thermal barrier pad that can effectively block or delay heat generated from battery cells from transferring to adjacent other battery cells, and a battery pack and a battery module including the same.

This application claims the benefit of priority from Korean Patent Application No. 10-2024-0062086, filed on May 10, 2024, and Korean Patent Application No. 10-2025-0003705, filed on January 9, 2025, the entire contents disclosed therein are incorporated by reference into this disclosure.

### [Background]

Secondary batteries refer to batteries that can be charged and discharged, unlike primary batteries that cannot be recharged, and are widely used in electronic devices such as cell phones, laptops, camcorders, or electric vehicles. In particular, lithium secondary batteries have larger capacity than nickel-cadmium batteries or nickel-hydrogen batteries and have high energy density per unit weight, so the utilization is rapidly increasing.

Various structures and/or manufacturing methods have been proposed and applied to manufacture secondary batteries, and various means for improving the quality of secondary batteries have been devised.

### [Summary]

### [Technical Problem]

A first technical problem to be solved by the present disclosure is to provide a thermal barrier pad that can effectively block or delay heat generated from battery cells from transferring to adjacent other battery cells.

A second technical problem to be solved by the present disclosure is to provide a battery pack including a thermal barrier pad that can effectively block or delay heat generated from battery cells from transferring to adjacent other battery cells.

A third technical problem to be solved by the present disclosure is to provide a battery module including a thermal barrier pad that can effectively block or delay heat generated from battery cells from transferring to adjacent other battery cells.

### [Technical Solution]

To achieve the first technical problem, the present disclosure provides a thermal barrier pad including: a porous insulation absorbing material having a first main surface and a second main surface; an endothermic solution composition absorbed in the insulation absorbing material; a heat conductive sheet covering at least one of the first main surface and the second main surface of the insulation absorbing material; and a heat dissipating pouch surrounding the insulation absorbing material and the heat conductive sheet and including a metal layer, wherein the endothermic solution composition includes: about 0.20 wt.% to about 0.45 wt.% of a surfactant; about 0.3 wt.% to about 5.0 wt.% of a thickening agent; and about 60 wt.% to about 80 wt.% of water.

In some embodiments, the thickening agent may include carboxymethyl cellulose (CMC), carboxyethyl cellulose, polyvinyl alcohol (PVA), starch, polyethylene oxide (PEO), hydroxymethyl cellulose, hydroxyethyl cellulose, hydroxypropyl cellulose, or glucomannan.

In some embodiments, the endothermic solution composition may include about 15 wt.% to about 35 wt.% of an antifreeze agent.

In some embodiments, the antifreeze agent may include CaCl₂, NaCl, potassium acetate, potassium formate, isopropanol, butyl diglycol, ethylene glycol, diethylene glycol, dipropylene glycol, propylene glycol, urea, and/or glycerol.

In some embodiments, the endothermic solution composition may include about 20 wt.% to about 30 wt.% of the antifreeze agent.

In some embodiments, the endothermic solution composition may include about 23 wt.% to about 27 wt.% of the antifreeze agent.

In some embodiments, the endothermic solution composition may include about 0.5 wt.% to about 3 wt.% of the thickening agent.

In some embodiments, the endothermic solution composition may include about 1 wt.% to about 2.2 wt.% of the thickening agent.

In some embodiments, the surfactant may be a silicone (Si)-based surfactant.

In some embodiments, the surfactant may include polydimethylsiloxane (PDMS).

In some embodiments, the heat conductive sheet may include copper, aluminum, zinc, tin, iron, or alloys thereof.

In some embodiments, the heat conductive sheet may be a copper sheet or a copper alloy sheet and may have a thickness of about 5 µm to about 50 µm.

In some embodiments, the insulation absorbing material may include a non-woven having silica fiber as a main component.

To achieve the second technical problem, the present disclosure provides a battery pack including: a pack case; a plurality of secondary batteries accommodated in the pack case and stacked in a first direction; and the thermal barrier pad provided between the plurality of secondary batteries.

To achieve the third technical problem, the present disclosure provides a battery module including: a module case; a plurality of secondary batteries accommodated in the module case and stacked in a first direction; and the thermal barrier pad provided between the plurality of secondary batteries.

### [Advantageous Effects]

The thermal barrier pad of the present disclosure can effectively block or delay heat generated from stacked battery cells from transferring to adjacent other battery cells.

The technical effects that can be obtained in exemplary embodiments of the present disclosure are not limited to the above-described effects, and other effects not mentioned can be clearly derived and understood by a person skilled in the art from the description below. In other words, unintended effects of implementing the exemplary embodiments of the present disclosure may also be derived from the exemplary embodiments of the present disclosure by a person skilled in the art.

### [Brief Description of the Drawings]

FIG. 1 is a perspective view of a battery pack according to exemplary embodiments of the present disclosure.
FIG. 2 is a perspective view illustrating some elements of a battery pack according to exemplary embodiments of the present disclosure.
FIG. 3 is an enlarged perspective view illustrating battery cells mounted in a lower case according to an embodiment of the present disclosure.
FIG. 4 is an exploded perspective view illustrating a thermal barrier pad according to an embodiment of the present disclosure.
FIG. 5 is a perspective view of a thermal barrier pad according to an embodiment of the present disclosure.
FIG. 6 is a schematic side cross-sectional view illustrating the thermal barrier pad inserted between battery cells.
FIG. 7 is a front view of a thermal barrier pad according to an embodiment of the present disclosure illustrated in FIG. 5.
FIG. 8 is a cross-sectional view illustrating a cross-section of the thermal barrier pad cut along line VIII-VIII' of FIG. 7.
FIG. 9 is a graph depicting temperature changes over time measured for thermal barrier pads of Comparative Example 1 and Examples 1 to 4, respectively.
FIG. 10 is a perspective view of a battery pack according to another embodiment of the present disclosure.
FIG. 11 is an exploded perspective view of a battery module according to an embodiment of the present disclosure.
FIG. 12 is a perspective view of a battery module according to an embodiment of the present disclosure.
FIG. 13 is a side view schematically illustrating an electrified vehicle according to an embodiment of the present disclosure.
FIG. 14 is a schematic diagram conceptually illustrating a battery pack mounted in the electrified vehicle and other components thereof.

### [Detailed Description]

Hereinafter, preferred embodiments of the present disclosure concept will be described in detail with reference to the accompanying drawings. However, embodiments of the present disclosure concept may be modified in various different forms, and it should not be interpreted that the scope of the present disclosure concept is limited by the embodiments described below. It is preferred that the embodiments of the present disclosure be interpreted as provided to explain the present disclosure more fully to a person skilled in the art. Herein, the same reference numerals refer to the same elements. In addition, the various elements and areas of the drawings are schematically illustrated. Accordingly, the present disclosure is not limited by the relative sizes or spacing illustrated in the accompanying drawings.

Terms such as first, second, and the like may be used to describe various components, but the components are not limited by the terms. The terms are used only for the purpose of distinguishing one component from the other component. For example, a first component may be named a second component, and vice versa, a second component may be named a first component, without departing from the scope of the present disclosure concept.

The terms used in the present description are used merely to explain specific embodiments and are not intended to limit the present disclosure concept. Expressions in the singular include the plural unless the context clearly indicates otherwise. The terms "comprise," "include," and "have" used herein designate the presence of characteristics, numbers, steps, actions, components, or members described in the specification or a combination thereof, and it should be understood that the possibility of the presence or addition of one or more other characteristics, numbers, steps, actions, components, members, or a combination thereof is not excluded in advance.

Unless otherwise defined, all terms used herein, including technical terms and scientific terms, shall have the same meaning as commonly understood by a person skilled in the art of the technical field to which the present disclosure concept belongs. In addition, it will be understood that terms such as commonly used, dictionary-defined terms are to be construed to have a meaning consistent with the meaning they have in the context of the technology to which they relate and are not to be construed in an excessively formal sense unless explicitly defined herein.

Specific process sequences may be performed differently from the order described when some embodiments are otherwise implementable. For example, two processes described in succession may be performed substantially simultaneously or may be performed in an order opposite to the order described.

In the accompanying drawings, for example, variations of the depicted forms may be expected, depending on manufacturing technology and/or tolerances. Accordingly, embodiments of the present disclosure should not be construed as limited to the specific forms of the areas shown herein, and should include, for example, variations in form resulting from manufacturing processes. All terms "and/or" used herein are included each and every combination of one or more of the components mentioned.

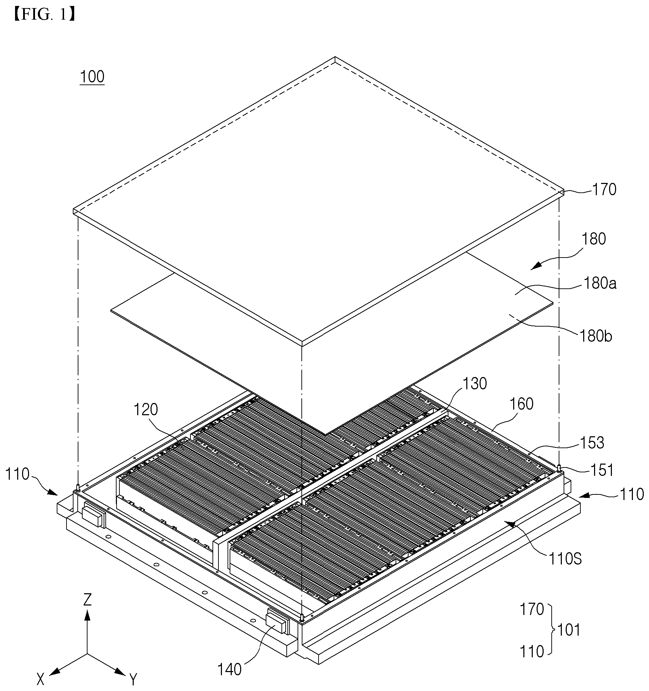

FIG. 1 is a perspective view of a battery pack 100 according to exemplary embodiments of the present disclosure.

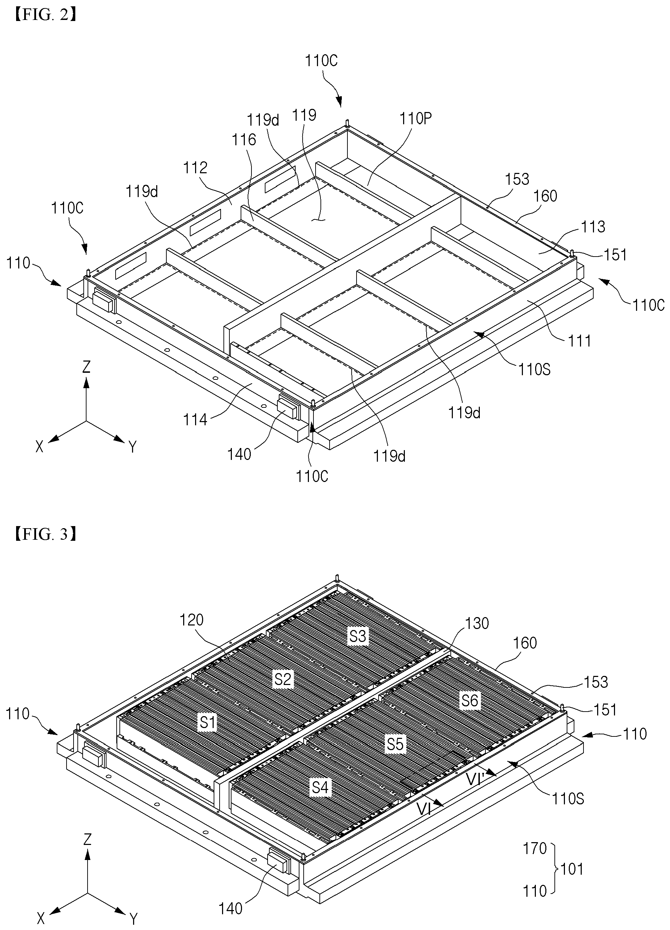

FIG. 2 is a perspective view illustrating some elements of a battery pack 100 according to exemplary embodiments of the present disclosure.

In FIG. 1 and FIG. 2, the battery pack 100 is shown as being defined in an orthogonal coordinate system defined by a first direction along the X-axis, a second direction along the Y-axis, and a third direction along the Z-axis, which are perpendicular to each other, but the first direction, the second direction, and the third direction are not particularly limited as long as they are relatively perpendicular to each other.

Referring to FIG. 1 and FIG. 2, the battery pack 100 may include a lower case 110, battery cells 120, a center beam 130, cross beams 116, a plurality of venting devices 140, a plurality of first recessed guides 151, a plurality of second recessed guides 153, a pack gasket 160, and an upper case 170. The battery pack 100 may be a final form of a battery system mounted on mobility and the like.

A pack housing 101 defining the appearance of the battery pack 100 may include the lower case 110 and the upper case 170.

The lower case 110 may provide an accommodation space 119 for mounting a plurality of battery cells 120. In some embodiments, the lower case 110 may include a plate part 110P and side walls 110S. Two directions substantially parallel to the plate part 110P are defined as a first direction (e.g., X-axis direction) and a second direction (e.g., Y-axis direction), and a direction substantially perpendicular to the plate part 110P of the housing 110 is defined as a third direction (e.g., Z-axis direction). Each of the X-axis direction, Y-axis direction, and Z-axis direction may be substantially perpendicular to each other. Unless otherwise mentioned, the definition of directions is the same for the following drawings.

A plurality of battery cells 120 may be arranged on the plate part 110P of the lower case 110. The plate part 110P may support the plurality of battery cells 120. The plate part 110P may include substantially parallel upper and lower surfaces. An upper surface of the plate part 110P may face the plurality of battery cells 120. A lower surface of the plate part 110P is an opposite surface to the upper surface of the plate part 110P.

The side walls 110S may horizontally surround the plurality of battery cells 120. The side walls 110S may protect the plurality of battery cells 120 from lateral directions. The side walls 110S may include a first side wall 111, a second side wall 112, a third side wall 113, and a fourth side wall 114. The first to fourth side walls 111, 112, 113, 114 may be fixed to each other by methods such as friction stir welding, spot welding, and the like, but are not particularly limited.

The first and second side walls 111, 112 may be substantially perpendicular to the second direction (e.g., Y-axis direction). Each of the third and fourth side walls 113, 114 may be substantially perpendicular to the first direction (e.g., X-axis direction). In some embodiments, the first and second side walls 111, 112 may cover side surfaces of the plate part 110P. In some embodiments, the third and fourth side walls 113, 114 may be disposed on the plate part 110P.

In some embodiments, the first to fourth side walls 111, 112, 113, 114 may be provided by an extrusion process. According to exemplary embodiments, the first to fourth side walls 111, 112, 113, 114 may include internal hollow spaces, and accordingly, the side walls 110S may be lightened. According to exemplary embodiments, the hollow spaces of the first to fourth side walls 111, 112, 113, 114 may be any one of gas venting paths and coolant channels.

Hereinafter, the technical idea of the present disclosure will be described with reference to an embodiment in which each of the plurality of battery cells 120 does not include a module frame. However, this is a non-limiting example and does not limit the technical idea of the present disclosure in any sense. A person skilled in the art will be able to easily reach a battery pack adopting battery modules including a module frame exposing one edge of the battery cells based on what is described herein.

The accommodation space 119 may be divided into two or more compartment spaces 119d by one or more compartment beams 130, 116. The compartment beams 130, 116 may include a center beam 130. In some embodiments, the compartment beams 130, 116 may include one or more cross beams 116.

The center beam 130 may isolate elements mounted on the lower case 110 from each other. Accordingly, the center beam 130 may protect the plurality of battery cells 120 while preventing unwanted short circuits between them.

The center beam 130 may extend between the third and fourth side walls 113, 114. The center beam 130 may extend in the first direction (e.g., X-axis direction). The center beam 130 may contact the third side wall 113 and the fourth side wall 114. The center beam 130 may isolate the plurality of battery cells 120 from each other. The center beam 130 may be interposed between the plurality of battery cells 120. In some embodiments, the center beam 130 may divide the accommodation space 119 into two regions in the second direction (e.g., Y-axis direction).

In some embodiments, the cross beams 116 may be provided to divide the accommodation space 119 into two or more regions in the first direction (e.g., X-axis direction). The cross beams 116 may additionally isolate elements isolated by the center beam 130.

Some cross beams 116 may extend in the second direction (e.g., Y-axis direction) between the center beam 130 and the first side wall 111. Other cross beams 116 may extend in the second direction (e.g., Y-axis direction) between the center beam 130 and the second side wall 112. In some embodiments, the cross beams 116 may be provided to define a space in which one battery cell stack or a group of battery cells is accommodated.

The arrangement of the center beam 130, cross beams 116, and plurality of battery cells 120 disclosed in FIG. 1 is a non-limiting example and does not limit the technical idea of the present disclosure in any sense. A person skilled in the art will be able to easily reach a battery pack including center beams and battery cells of various arrangements and numbers based on what is described herein.

A plurality of venting devices 140 may be coupled to the fourth side wall 114. The fourth side wall 114 may include a plurality of venting holes connected to the plurality of venting devices 140. The plurality of venting holes may be configured to provide a path for discharging gas and heat inside the battery pack 100.

The plurality of venting devices 140 may be configured to delay thermal propagation by releasing high-temperature gas inside the battery pack 100 to the outside when at least one of the plurality of battery cells 120 is in a thermal runaway state.

Here, thermal runaway of the plurality of battery cells 120 is a state in which temperature changes of the plurality of battery cells 120 further accelerate the temperature changes, which is uncontrollable positive feedback. The plurality of battery cells 120 in a thermal runaway state exhibit rapid temperature rise and may discharge large amounts of highpressure gas and combustion residues.

In some embodiments, the plurality of first recessed guides 151 may be disposed on the side walls 110S. The plurality of first recessed guides 151 may be disposed on corners 110C of upper surfaces of the side walls 110S. The plurality of first recessed guides 151 may be coupled to the corners 110C of the upper surfaces of the side walls 110S. The plurality of first recessed guides 151 may be partially buried in the side walls 110S. The plurality of first recessed guides 151 may partially protrude from the side walls 110S.

In some embodiments, the plurality of second recessed guides 153 may be disposed on the side walls 110S. The plurality of second recessed guides 153 may be disposed on the upper surfaces of the side walls 110S. The plurality of second recessed guides 153 may be interposed between the corners 110C of the side walls 110S. The plurality of second recessed guides 153 may be interposed between the plurality of first recessed guides 151. The plurality of second recessed guides 153 may be coupled to the upper surfaces of the side walls 110S. The plurality of second recessed guides 153 may be partially buried in the side walls 110S. The plurality of second recessed guides 153 may partially protrude from the side walls 110S.

In some embodiments, each of the plurality of first and second recessed guides 151, 153 may include a metal material. Each of the plurality of first and second recessed guides 151, 153 may include, for example, aluminum. Each of the plurality of first and second recessed guides 151, 153 may include, for example, steel such as carbon steel, nickel steel, chromium steel, nickel-chromium steel, and manganese steel.

The battery pack 100 may further include electrical components. In some embodiments, the electrical components may be mounted on the lower case 110. In some embodiments, the electrical components may be disposed between the fourth side wall 114 where the venting devices 140 are installed and the plurality of battery cells 120. In some embodiments, the electrical components may include any electronic elements necessary to operate the battery pack.

In some embodiments, the electrical components may include, for example, a battery management system (BMS). The BMS may be configured to perform monitoring, balancing, and control of the battery pack. In some embodiments, monitoring of the battery pack 100 may include measurement of voltage and current of specific battery cells among the plurality of battery cells 120 and measurement of temperature at set positions inside the battery pack 100. In some embodiments, the battery pack 100 may include measuring instruments for measuring the above-mentioned voltage, current, and temperature.

The balancing of the battery pack 100 is an operation to reduce deviations between the plurality of battery cells 120. The control of the battery pack 100 includes preventing occurrence of overcharging, overdischarging, and overcurrent. Through monitoring, balancing, and control, the battery pack 100 can operate under optimal conditions, and accordingly, shortening of the lifespan of each of the plurality of battery cells 120 can be prevented or reduced.

The electrical components may further include a cooling device, a power relay assembly (PRA), a safety plug, and the like. The cooling device may include a cooling fan. The cooling fan may prevent overheating of each of the plurality of battery cells 120 by circulating air inside the battery pack 100. The PRA may be configured to supply or block power from a high-voltage battery to an external load (e.g., a vehicle motor). The PRA may protect the plurality of battery cells 120 and the external load (e.g., a vehicle motor) by blocking power supply to the external load (e.g., a vehicle motor) in situations where abnormal voltages such as voltage surges occur.

The battery pack 100 may further include a plurality of busbars configured to electrically connect the plurality of battery cells 120. The plurality of battery cells 120 may be connected in series and/or parallel by the plurality of busbars. Accordingly, the battery pack 100 may be configured to output high voltage to an external load (e.g., a vehicle motor).

The gasket 160 may include a material having elasticity in response to applied pressure. The gasket 160 may include rubber synthesized from materials such as ethylene-propylene diene monomer (EPDM). When the lower case 110 and the upper case 170 are coupled, the gasket 160 may be interposed between the lower case 110 and the upper case 170. The lower case 110 and the upper case 170 may press the gasket 160 such that some deformation occurs in the gasket 160. Accordingly, the battery pack 100 may be sealed, and external fluid may be blocked from the internal space of the battery pack 100.

The upper case 170 may be coupled to the lower case 110 to cover the accommodation space 119. In some embodiments, the upper case 170 may include a main surface and an edge portion. The main surface may cover elements mounted on the battery pack 100 such as the plurality of battery cells 120 and electrical components. The edge portion is a surface that contacts the lower case 110. In some embodiments, the upper case 170 may be in the form of a plate, in which case the edge portion may horizontally surround the main surface. In some embodiments, the main surface may be elevated compared to the edge portion, and the edge portion and the main surface may be connected by a curved portion.

In some embodiments, the upper case 170 may be coupled to the side walls 110S of the lower case 110 by the plurality of first and second recessed guides 151, 153. According to exemplary embodiments, the battery pack 100 may further include elements coupled to the plurality of first and second recessed guides 151, 153 to fix the upper case 170 to the side walls 110S of the lower case 110. The elements may include bolts and nuts, but are not limited thereto.

FIG. 3 is an enlarged perspective view illustrating battery cells 120 mounted in a lower case 110 according to an embodiment of the present disclosure.

Referring to FIG. 3, battery cell stacks (S1, S2, ... , S6) are disposed in each region defined by each side wall (111, 112, 113, 114) of the lower case 110, the center beam 130, and the cross beam 116. Each of the battery cell stacks (S1, S2, ... , S6) includes a plurality of battery cells 120. Hereinafter, a battery cell stack may simply refer to an aggregation of a plurality of battery cells, or may refer to an assembly in which a plurality of battery cells is accommodated within a specific frame.

In some embodiments, the battery cells 120 may be pouch-type battery cells, but the present disclosure is not limited thereto. In some other embodiments, the battery cells 120 may be prismatic battery cells or cylindrical battery cells.

In some embodiments, the pouch-type battery cell may have a structure in which a positive electrode, a separator, and a negative electrode are alternately stacked to form the electrode assembly, and an electrode tab is drawn out to at least one side to be connected to the cell lead. The positive electrode and the negative electrode may be manufactured by applying a slurry of electrode active material, binder resin, conductive agent, and other additives to at least one surface of a current collector. For the electrode active material, in the case of the positive electrode, conventional positive electrode active materials such as lithium-containing transition metal oxides may be used, and in the case of the negative electrode, conventional negative electrode active materials such as lithium metal, carbon materials, and metal compounds or mixtures thereof that can intercalate and deintercalate lithium ions may be used. Additionally, as the separator, conventional porous polymer films used in lithium secondary batteries can be adopted.

As the electrolyte accommodated in the cover together with the electrode assembly, conventional electrolytes for lithium secondary batteries may be adopted. The cover is formed of a sheet material and has an accommodation part for accommodating the electrode assembly. Preferably, the cover is formed by combining a first case and a second case formed by processing the sheet material into a predetermined shape. The sheet material forming the cover has a multilayer structure in which an outer resin layer made of insulating materials such as polyethylene terephthalate (PET) or nylon, a metal layer made of aluminum material that maintains mechanical strength and prevents penetration of moisture and oxygen, and an inner resin layer made of polyolefin-based materials that have thermal adhesiveness and serve as a sealing material are stacked.

The sheet material forming the cover may have predetermined adhesive resin layers interposed between the inner resin layer and the metal layer, and between the outer resin layer and the metal layer as needed. The adhesive resin layer is for smooth adhesion between different materials and is formed in single or multiple layers. The material is typically polyolefin-based resin or polyurethane resin for smooth processing, and mixtures thereof can also be adopted.

The plurality of battery cells 120 may be arranged in a first direction (e.g., X-axis direction). In some embodiments, the first battery cell stack (S1), the second battery cell stack (S2), and the third battery cell stack (S3) may be arranged in the first direction (e.g., X-axis direction). In some embodiments, the fourth battery cell stack (S4), the fifth battery cell stack (S5), and the sixth battery cell stack (S6) may be arranged in the first direction (e.g., X-axis direction).

In some embodiments, the first battery cell stack (S1) and the fourth battery cell stack (S4) may be arranged in a second direction (e.g., Y-axis direction). In some embodiments, the second battery cell stack (S2) and the fifth battery cell stack (S5) may be arranged in the second direction (e.g., Y-axis direction). In some embodiments, the third battery cell stack (S3) and the sixth battery cell stack (S6) may be arranged in the second direction (e.g., Y-axis direction).

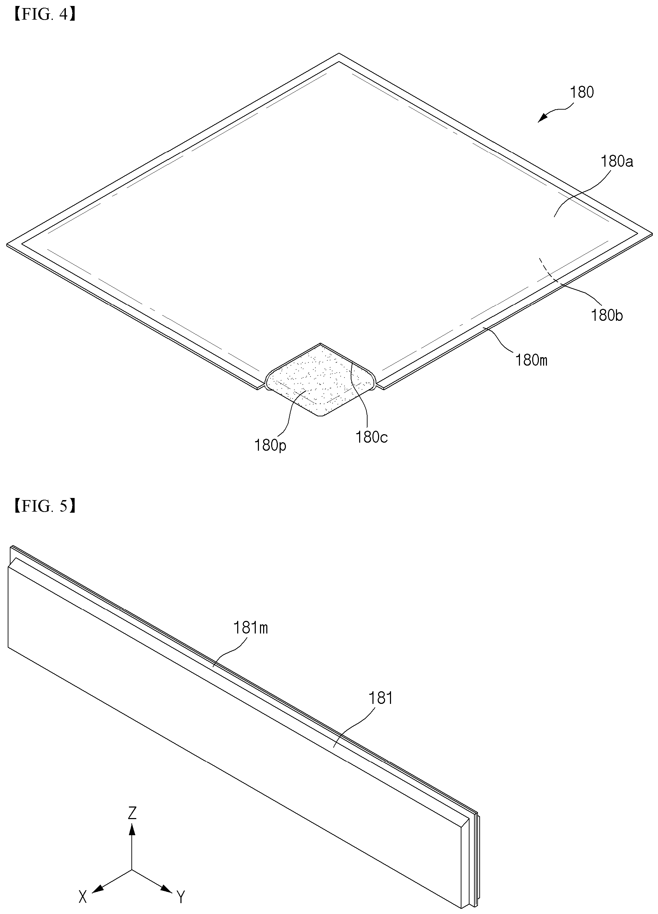

FIG. 4 is an exploded perspective view illustrating a thermal barrier pad 180 according to an embodiment of the present disclosure.

Referring to FIG. 1 to FIG. 4, the battery pack 100 may further include a thermal barrier pad 180. The thermal barrier pad 180 may absorb heat generated from the battery cells 120 and/or block or delay transfer of the heat.

The thermal barrier pad 180 may include a porous insulation absorbing material 180p and an endothermic solution composition absorbed in the insulation absorbing material 180p.

In some embodiments, the endothermic solution composition may include about 0.20 wt.% to about 0.45 wt.% of a surfactant; about 0.3 wt.% to about 5.0 wt.% of a thickening agent; and about 60 wt.% to about 80 wt.% of water.

### <Surfactant>

In some embodiments, the surfactant may include a cationic surfactant, an anionic surfactant, a nonionic surfactant, an amphoteric surfactant, a fluorine-based surfactant, or a silicone-based surfactant.

The cationic surfactant may include alkylamine salts, amine salts such as polyamines and amino alcohol fatty acid derivatives, alkyl quaternary ammonium salts, aromatic quaternary ammonium salts, pyridium salts, or imidazolium salts.

The anionic surfactant may include fatty acid soaps such as sodium stearate or triethanolamine palmitate, alkyl ether carboxylic acids and salts thereof, condensate salts of amino acids and fatty acids, alkane sulfonates, alkene sulfonic acids, sulfonates of fatty acid esters, sulfonates of fatty acid amides, formalin condensation-type sulfonates, alkyl sulfate ester salts, secondary higher alcohol sulfate ester salts, alkyl and allyl ether sulfate ester salts, sulfate ester salts of fatty acid esters, sulfate ester salts of fatty acid alkylolamides, sulfate ester salts such as rosin oil, alkyl phosphates, ether phosphates, alkyl allyl ether phosphates, amide phosphates, N-acyl lactates, N-acyl sarcosine salts, or N-acyl amino acid-based active agents.

As the nonionic surfactant, glycerol, trimethylolpropane, trimethylolethane and their ethoxylates and propoxylates (for example, glycerol propoxylate, glycerol ethoxylate, etc.), polyoxyethylene lauryl ether, polyoxyethylene stearyl ether, polyoxyethylene oleyl ether, polyoxyethylene octyl phenyl ether, polyoxyethylene nonyl phenyl ether, polyethylene glycol dilaurate, polyethylene glycol distearate, sorbitan fatty acid ester, glycerin fatty acid ester, polyglycerin fatty acid ester, propylene glycol fatty acid ester, polyethylene glycol fatty acid ester, sucrose fatty acid ester, methyl glucoside fatty acid ester, alkyl polyglucoside, polyoxyethylene alkyl ether, polyoxypropylene alkyl ether, polyoxyethylene alkyl phenyl ether, polyoxyethylene fatty acid ester, polyoxyethylene sorbitan fatty acid ester, polyoxyethylene sorbitol fatty acid ester, polyoxyethylene glycerin fatty acid ester, polyoxyethylene propylene glycol fatty acid ester, polyoxyethylene castor oil, polyoxyethylene hydrogenated castor oil, polyoxyethylene phytostanol ether, polyoxyethylene phytosterol ether, polyoxyethylene cholestanol ether, polyoxyethylene cholesterol ether, linear or branched polyoxyalkylene-modified organopolysiloxane, linear or branched polyoxyalkylene-alkyl co-modified organopolysiloxane, linear or branched polyglycerin-modified organopolysiloxane, linear or branched polyglycerin-alkyl co-modified organopolysiloxane, alkanolamides, sugar ethers, sugar amides, and the like can be mentioned.

As the amphoteric surfactant, betaine, amino carboxylate, imidazoline derivatives, amidoamine types, and the like can be mentioned.

The fluorine-based surfactant can use a polymer of a fluorine atom-containing vinyl ether compound having a fluorinated alkyl group or a fluorinated alkylene ether group and a hydrophilic vinyl ether compound. The fluorine-based surfactant may also use a block polymer. As the fluorine-based surfactant, a fluorine-containing polymer compound including repeating units derived from a (meth)acrylate compound having fluorine atoms and repeating units derived from a (meth)acrylate compound having 2 or more (preferably 5 or more) alkylene oxy groups (preferably ethylene oxy groups, propylene oxy groups) can also be used.

Among commercially available fluorine-based surfactants, DIC Corporation's MEGAFACE^{®} product line F-114, F-251, F-253, F-281, F-410, F-430, F-477, F-510, F-551, F-552, F-553, F-554, F-555, F-556, F-557, F-558, F-559, F-560, F-561, F-562, F-563, F-565, F-568, F-569, F-570, F-572, F-574, F-575, F-576, R-4, R-41, R-94, RS-56, RS-72-K, RS-75, RS-76-E, RS-76-NS, RS-78, RS-90, DS-21; 3M Corporation's Fluorosurfactant^{®} product line FC-135, FC-170C, FC-430, FC-431, FC-4430, FC-4433, etc.; AGC Corporation's SURFLON^{®} product line S-211, S-221, S-231, S-232, S-241, S-242, S-243, S-420, S-431, S-386, S-611, S-647, S-651, S-653, S-656, S-658, F693; DuPont Corporation's CAPSTONE^{®} product line FS-30, FS-65, FS-31, FS-3100, FS-34, FS-35, FS-50, FS-51, FS-60, FS-61, FS-63, FS-64, FS-81, FS-22, FS-83, and the like can be mentioned, but are not limited thereto.

The silicone-based surfactant includes DOWSIL SH8400, SH8400 FLUID, FZ-2122, 67 Additive, 74 Additive, M Additive, SF 8419 OIL (all manufactured by Dow Toray Co., Ltd.), TSF-4300, TSF-4445, TSF-4460, TSF-4452 (all manufactured by Momentive Performance Materials Inc.), KP-341, KF-6000, KF-6001, KF-6002, KF-6003 (all manufactured by Shin-Etsu Chemical Co., Ltd.), BYK-300, BYK-301, BYK-302, BYK-306, BYK-307, BYK-310, BYK-313, BYK-315N, BYK-320, BYK-322, BYK-323, BYK-325N, BYK-326, BYK-327, BYK-329, BYK-330, BYK-331, BYK-332, BYK-333, BYK-342, BYK-345, BYK-346, BYK-347, BYK-348, BYK-350, BYK-352, BYK-354, BYK-355, BYK-356, BYK-358N, BYK-359, BYK-360P, BYK-361N, BYK-364P, BYK-366P, BYK-368P, BYK-370, BYK-375, BYK-377, BYK-378, BYK-381, BYK-390, BYK-392, BYK-394, BYK-3760, BYK-UV3510 (all manufactured by BYK-Chemie), DYNOL 360, DYNOL 604, DYNOL 607, DYNOL 800, DYNOL 810, TEGO product line, Twin 4000, Twin 4100, Twin 4200 (all manufactured by Evonik), and the like can be mentioned, but are not limited thereto. In some embodiments, the silicone-based surfactant may include polydimethylsiloxane (PDMS).

The endothermic solution composition may include about 0.20 wt.% to about 0.45 wt.% of the surfactant. In some embodiments, the endothermic solution composition may include the surfactant in amounts of about 0.20 wt.% to about 0.45 wt.%, about 0.21 wt.% to about 0.44 wt.%, about 0.22 wt.% to about 0.43 wt.%, about 0.23 wt.% to about 0.42 wt.%, about 0.24 wt.% to about 0.41 wt.%, about 0.25 wt.% to about 0.40 wt.%, about 0.26 wt.% to about 0.39 wt.%, about 0.27 wt.% to about 0.38 wt.%, about 0.28 wt.% to about 0.37 wt.%, about 0.29 wt.% to about 0.36 wt.%, about 0.30 wt.% to about 0.35 wt.%, about 0.31 wt.% to about 0.34 wt.%, about 0.32 wt.% to about 0.33 wt.%, or in ranges between any two of these values.

When the content of the surfactant included in the endothermic solution composition is too low, the endothermic performance of the endothermic solution composition may be insufficient. When the content of the surfactant included in the endothermic solution composition is too high, the endothermic performance of the endothermic solution composition may be saturated and economically disadvantageous.

### <Thickening Agent>

In some embodiments, the thickening agent may include carboxymethyl cellulose (CMC), carboxyethyl cellulose, polyvinyl alcohol (PVA), starch, polyethylene oxide (PEO), hydroxymethyl cellulose, hydroxyethyl cellulose, hydroxypropyl cellulose, or glucomannan.

The endothermic solution composition may include about 0.3 wt.% to about 5.0 wt.% of the thickening agent. In some embodiments, the endothermic solution composition may include about 0.5 wt.% to about 3.0 wt.% of the thickening agent. In some embodiments, the endothermic solution composition may include about 1 wt.% to about 2.2 wt.% of the thickening agent. In some embodiments, the endothermic solution composition may include the thickening agent in amounts of about 0.3 wt.% to about 5.0 wt.%, about 0.4 wt.% to about 4.5 wt.%, about 0.5 wt.% to about 4.0 wt.%, about 0.6 wt.% to about 3.5 wt.%, about 0.7 wt.% to about 3.0 wt.%, about 0.8 wt.% to about 2.5 wt.%, about 0.9 wt.% to about 2.0 wt.%, about 1 wt.% to about 1.5 wt.%, or in ranges between any two of these values.

When the content of the thickening agent included in the endothermic solution composition is too low, the endothermic solution composition may leak. When the content of the thickening agent included in the endothermic solution composition is too high, the productivity of the endothermic solution composition may decrease.

In some embodiments, the endothermic solution composition may further include an antifreeze agent. The antifreeze agent may include, for example, salts such as CaCl₂, NaCl, potassium acetate, or potassium formate; or short-chain alcohols or glycols such as isopropanol, butyl diglycol, ethylene glycol, diethylene glycol, dipropylene glycol, or propylene glycol, and may also include urea or glycerol.

The endothermic solution composition may include about 15 wt.% to about 35 wt.% of the antifreeze agent. In some embodiments, the endothermic solution composition may include about 20 wt.% to about 30 wt.% of the antifreeze agent.

In some embodiments, the endothermic solution composition may include the antifreeze agent in amounts of about 15 wt.% to about 35 wt.%, about 16 wt.% to about 34 wt.%, about 17 wt.% to about 33 wt.%, about 18 wt.% to about 32 wt.%, about 19 wt.% to about 31 wt.%, about 20 wt.% to about 30 wt.%, about 21 wt.% to about 29 wt.%, about 22 wt.% to about 28 wt.%, about 23 wt.% to about 27 wt.%, about 24 wt.% to about 26 wt.%, or in ranges between any two of these values.

When the content of the antifreeze agent included in the endothermic solution composition is too low, the endothermic solution composition may easily freeze at low temperatures. When the content of the antifreeze agent included in the endothermic solution composition is too high, the endothermic performance of the endothermic solution composition may decrease.

In some embodiments, the endothermic solution composition may include about 60 wt.% to about 80 wt.% of water. In some embodiments, the endothermic solution composition may include water in amounts of about 60 wt.% to about 80 wt.%, about 61 wt.% to about 79 wt.%, about 62 wt.% to about 78 wt.%, about 63 wt.% to about 77 wt.%, about 64 wt.% to about 76 wt.%, about 65 wt.% to about 75 wt.%, about 66 wt.% to about 74 wt.%, about 67 wt.% to about 73 wt.%, about 68 wt.% to about 72 wt.%, about 69 wt.% to about 71 wt.%, or in ranges between any two of these values.

When the content of water included in the endothermic solution composition is too low, the endothermic performance of the endothermic solution composition may decrease. When the content of water included in the endothermic solution composition is too high, the endothermic duration of the endothermic solution composition may be shortened.

In some embodiments, the thermal barrier pad 180 may be provided on top of the battery cells 120. In some embodiments, the thermal barrier pad 180 may be provided between the upper case 170 and the battery cells 120. Hereinafter, the thermal barrier pad provided between the upper case 170 and the battery cells 120 may be referred to as a first thermal barrier pad 180.

The first thermal barrier pad 180 may have a predetermined area along a plane perpendicular to the third direction (e.g., Z-axis direction). The first thermal barrier pad 180 may include a heat dissipating pouch 180c having an internal space. The heat dissipating pouch 180c may constitute the appearance of the first thermal barrier pad 180. In some embodiments, the first thermal barrier pad 180 may include an insulation absorbing material 180p and an endothermic solution composition provided in the internal space of the heat dissipating pouch 180c. The heat dissipating pouch 180c includes generally parallel first layer 180a and second layer 180b, and the internal space may be defined between the first layer 180a and the second layer 180b.

The heat dissipating pouch 180c may consist of a single layer or may be a laminate in which two or more layers are stacked. In some embodiments, the heat dissipating pouch 180c may include an outermost outer resin layer made of insulating materials such as polyethylene terephthalate (PET) or nylon. In some embodiments, the heat dissipating pouch 180c may include a metal layer that maintains mechanical strength and prevents penetration of moisture and oxygen. The metal layer may include, for example, aluminum or alloys thereof. In some embodiments, the heat dissipating pouch 180c may include an inner resin layer made of polyolefin-based materials that have thermal adhesiveness and serve as a sealing material.

Although the outer surface of the heat dissipating pouch 180c is shown as completely flat in FIG. 4 for convenience of illustration, the heat dissipating pouch 180c may be deformable by external forces, may not be completely flat, and may be at least partially deformed by external forces.

The endothermic solution composition may be absorbed in the insulation absorbing material 180p and may include materials that can undergo phase change according to temperature changes. The heat dissipating pouch 180c may be configured to be deformable according to the phase change of the endothermic solution composition.

In some embodiments, the insulation absorbing material 180p may include a porous insulation material. The porous insulation material may be, for example, glass fiber or silica fiber. In some embodiments, the insulation absorbing material 180p may include a non-woven having glass fiber or silica fiber as a main component. Here, 'main component' means that the corresponding component is contained in excess of 50% by weight of the total.

In some embodiments, the insulation absorbing material 180p may include an absorbent resin such as a super absorbent polymer (SAP). The super absorbent polymer may be any material known in the art and is not particularly limited. In some embodiments, the super absorbent polymer may include polyacrylamide, polyacrylic acid, polymethacrylic acid, polyethylene oxide, polyvinyl alcohol, gelatin, polysaccharides, chitosan, sodium carboxymethylcellulose, or combinations thereof, but the present disclosure is not limited thereto. In some embodiments, the insulation absorbing material 180p may have forms such as powder, granules, pellets, platelets, slabs, and the like, and is not particularly limited.

A liquid endothermic solution composition may be absorbed in the insulation absorbing material 180p. In some embodiments, the endothermic solution composition may include materials that can repeat vaporization and condensation within the operating temperature range of the battery cells 120 and pressure ranges around atmospheric pressure. For example, the endothermic solution composition may include materials that can be vaporized or condensed in a pressure range of about 1 atmosphere to about 10 atmospheres and at temperatures of about 70°C to about 130°C.

The endothermic solution composition may be vaporized by heat transferred from the battery cells 120 through the second layer 180b of the heat dissipating pouch 180c. The vaporized endothermic material may exist in a gaseous state within the heat dissipating pouch 180c and then condense and liquefy as it cools, and may be reabsorbed into the insulation absorbing material 180p. Since the heat transferred from the battery cells 120 is used for temperature rise and heat of vaporization of the endothermic material, transfer of the heat to adjacent other battery cells 120 can be reduced or blocked.

In some embodiments, the first thermal barrier pad 180 may have a bonding part 180m. In some embodiments, the bonding part 180m may be a part formed by fusing opposing laminate sheets of the first thermal barrier pad 180 (i.e., the first layer 180a and the second layer 180b). In some embodiments, the first thermal barrier pad 180 may be configured so that the bonding part 180m is opened or a specific position of the bonding part 180m is opened when a thermal event occurs inside.

As shown in FIG. 1 and FIG. 4, when the first thermal barrier pad 180 is disposed between the upper surface of the battery cells 120 and the upper case 170, even if a thermal event occurs in a specific battery cell 120, the flame energy can be effectively weakened and damage to the upper case 170 by heat can be mitigated or prevented.

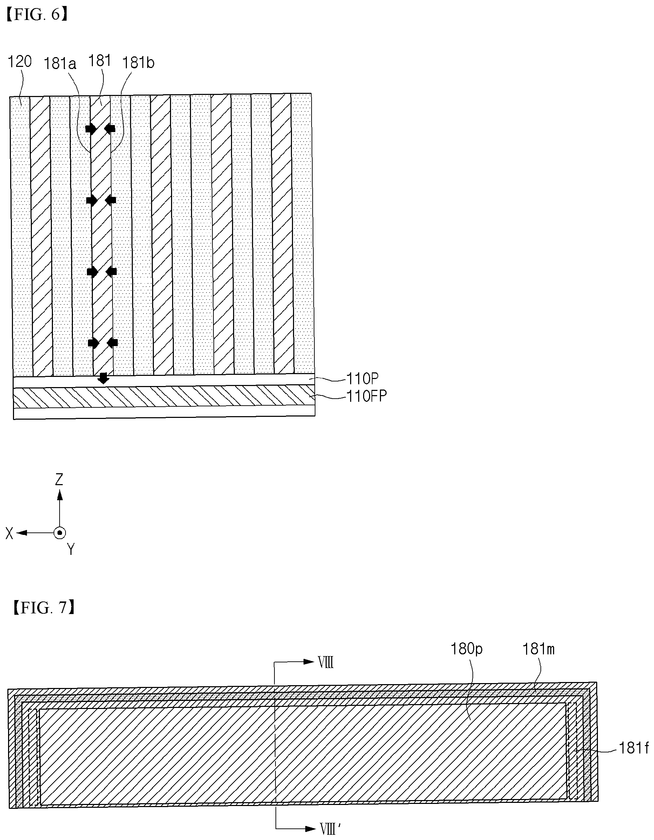

FIG. 5 is a perspective view of a thermal barrier pad 181 according to an embodiment of the present disclosure. FIG. 6 is a schematic side cross-sectional view illustrating the thermal barrier pad 181 inserted between battery cells 120.

The side cross-section shown in FIG. 6 may be, for example, a cross-section cut along line VI-VI' of FIG. 3.

Referring to FIG. 5 and FIG. 6, the thermal barrier pad 181 may have a form extending generally in the second direction (e.g., Y-axis direction), which is the longitudinal direction of the battery cells 120. In some embodiments, the thermal barrier pad 181 extends in the second direction (e.g., Y-axis direction) and may directly contact the side surface of an adjacent battery cell 120. Hereinafter, the thermal barrier pad provided on the side surface of the battery cell 120 may be referred to as a second thermal barrier pad 181.

The second thermal barrier pad 181 may have a predetermined area along a plane perpendicular to the first direction (e.g., X-axis direction). In some embodiments, the second thermal barrier pad 181 may be interposed between a pair of battery cells 120. A first side surface 181a forming one side of the second thermal barrier pad 181 may directly contact one battery cell 120 of the pair of battery cells 120. Also, a second side surface 181b forming the other side of the second thermal barrier pad 181 may directly contact the other battery cell 120 of the pair of battery cells 120.

In some embodiments, the second thermal barrier pad 181 may be thermally connected to the lower case 110 and may transfer heat received from the battery cells 120 to the plate part 110P. In some embodiments, the second thermal barrier pad 181 may be thermally connected to the upper case 170 (refer to FIG. 1). Here, the second thermal barrier pad 181 being 'thermally connected' to a certain object may mean that most of the heat released from the second thermal barrier pad 181 is removed through that object, for example, may mean that more than 50% of the heat released from the second thermal barrier pad 181 is removed through that object.

In some embodiments, the plate part 110P of the lower case 110 may include a heat sink 110FP. For example, the heat sink 110FP may include a flow path configured to allow cooling fluid to flow inside. Therefore, heat transferred to the lower plate part 110P through the second thermal barrier pad 181 can be smoothly removed by the cooling fluid flowing through the heat sink 110FP. For this purpose, the second thermal barrier pad 181 may be disposed closer to the lower case 110 than to the upper case 170.

In some embodiments, the second thermal barrier pad 181 may be arranged alternately with the battery cells 120 one by one. In some embodiments, the second thermal barrier pad 181 may be provided one for every two or more battery cells 120. That is, two or more battery cells 120 may be disposed between the two closest neighboring second thermal barrier pads 181.

In some embodiments, the second thermal barrier pad 181 may be provided at both ends of the plurality of battery cells 120 provided in one compartment space 119d in the first direction (e.g., X-axis direction). In this case, a thermal event occurring in one compartment space 119d can be effectively prevented or delayed from transferring to another neighboring compartment space 119d. In this case, the second thermal barrier pad 181 may be arranged to directly face the cross beam 116.

In some embodiments, two battery cells 120 may be disposed between the two closest neighboring second thermal barrier pads 181. In this case, since at least one side surface of any battery cell 120 contacts the second thermal barrier pad 181, even if a thermal event occurs in the battery cell 120, heat transfer to the neighboring battery cell 120 can be minimized.

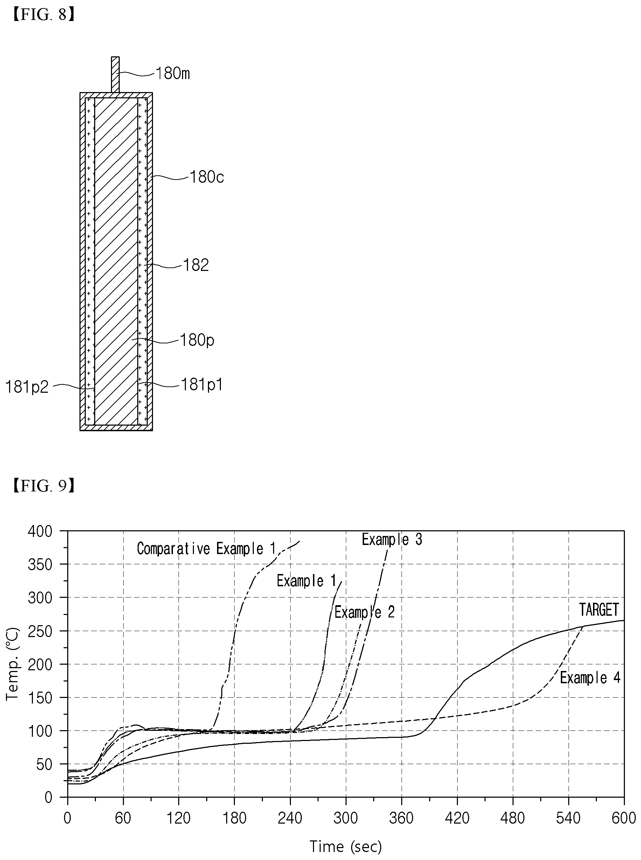

FIG. 7 is a front view of the second thermal barrier pad 181 according to an embodiment of the present disclosure illustrated in FIG. 5. FIG. 8 is a cross-sectional view illustrating a cross-section of the second thermal barrier pad 181 cut along line VIII-VIII' of FIG. 7.

Referring to FIG. 7 and FIG. 8, the second thermal barrier pad 181 has a porous insulation absorbing material 180p having a first main surface 181p1 and a second main surface 181p2. An endothermic solution composition is absorbed in the insulation absorbing material 180p. The first main surface 181p1 and the second main surface 181p2 may be generally parallel to each other.

A heat conductive sheet 182 may be provided on at least one of the first main surface 181p1 and the second main surface 181p2 of the insulation absorbing material 180p.

The heat conductive sheet 182 may include a metal material with excellent thermal conductivity. In some embodiments, the heat conductive sheet 182 may include copper (Cu), aluminum (Al), zinc (Zn), tin (Sn), iron (Fe), or alloys thereof.

In some embodiments, the heat conductive sheet 182 may have a thickness of about 5 µm to about 50 µm. In some embodiments, the heat conductive sheet 182 may have a thickness of about 5 µm to about 50 µm, about 10 µm to about 45 µm, about 15 µm to about 40 µm, about 20 µm to about 35 µm, about 25 µm to about 30 µm, or in ranges between any two of these values.

When the thickness of the heat conductive sheet 182 is too thin, mechanical strength may be insufficient and manufacturing may be difficult. When the thickness of the heat conductive sheet 182 is too thick, the weight of the product may increase excessively and manufacturing costs may rise.

In some embodiments, the heat conductive sheet 182 may be provided on the first main surface 181p1 of the insulation absorbing material 180p. In some other embodiments, the heat conductive sheet 182 may be provided on the first main surface 181p1 and the second main surface 181p2 of the insulation absorbing material 180p, respectively, as shown in FIG. 8.

In some embodiments, the heat conductive sheet 182 may be provided to substantially cover the entire surface of the first main surface 181p1 and/or the second main surface 181p2. In some other embodiments, the heat conductive sheet 182 may be provided to cover a partial surface of the first main surface 181p1 and/or the second main surface 181p2.

In some embodiments, the heat conductive sheet 182 may be in the form of a plate. In some other embodiments, the heat conductive sheet 182 may be in the form of a mesh. In some embodiments, the heat conductive sheet 182 may be in the form of a plate having holes.

The heat dissipating pouch 180c may be configured to surround the insulation absorbing material 180p and the heat conductive sheet 182. The heat dissipating pouch 180c has bonding parts 181m facing each other on the outside of the insulation absorbing material 180p. In some embodiments, the bonding parts 181m may seal the insulation absorbing material 180p and the heat conductive sheet 182 from the outside by being thermally fused.

A free space 181f may be provided on one side of the insulation absorbing material 180p within the heat dissipating pouch 180c. The free space 181f may accommodate some components of the endothermic solution composition vaporized from the insulation absorbing material 180p by absorbing heat. The free space 181f may be provided between the insulation absorbing material 180p and the bonding part 181m. In FIG. 7, the free space 181f is shown as being located only on the lateral side of the insulation absorbing material 180p, but the present disclosure is not limited thereto. In some embodiments, the free space 181f may also be located on the upper side of the insulation absorbing material 180p based on the arrangement in FIG. 7.

Hereinafter, the configuration and effects of the present disclosure will be described in more detail with specific examples and comparative examples, but these examples are merely for understanding the present disclosure more clearly and are not intended to limit the scope of the present disclosure.

### <Comparative Example 1>

A polyacrylonitrile-based super absorbent polymer having a plate form was adopted as the insulation absorbing material. After absorbing water as the endothermic solution composition into the insulation absorbing material, copper foil with a thickness of 0.01 mm was placed on both sides of the insulation absorbing material as heat conductive sheets.

After surrounding the insulation absorbing material and heat conductive sheet with a heat dissipating pouch 180c, the thermal barrier pad was manufactured by sealing with thermal fusion. For the heat dissipating pouch 180c, a conventional laminate sheet used when manufacturing pouch-type battery cells and including an aluminum layer was used.

### <Example 1>

A thermal barrier pad was manufactured in the same manner as Comparative Example 1, except that the endothermic solution composition included 0.5 wt.% of CMC as a thickening agent and 0.25 wt.% of PDMS as a surfactant.

### <Example 2>

A thermal barrier pad was manufactured in the same manner as Comparative Example 1, except that the endothermic solution composition included 1 wt.% of CMC as a thickening agent and 0.25 wt.% of PDMS as a surfactant.

### <Example 3>

A thermal barrier pad was manufactured in the same manner as Comparative Example 1, except that the endothermic solution composition included 2 wt.% of CMC as a thickening agent and 0.25 wt.% of PDMS as a surfactant.

### <Example 4>

A thermal barrier pad was manufactured in the same manner as Comparative Example 1, except that the endothermic solution composition included 1 wt.% of CMC as a thickening agent, 0.3 wt.% of PDMS as a surfactant, and 25 wt.% of CaCl₂ as an antifreeze agent.

Temperature changes over time of the thermal barrier pads manufactured in Comparative Example 1 and Examples 1 to 4 were measured while heating with a torch through a stainless steel plate interposed on one side of the thermal barrier pad. The temperature of the thermal barrier pad was measured by inserting a thermocouple between the thermal barrier pad and the stainless steel plate.

FIG. 9 is a graph depicting temperature changes over time measured for thermal barrier pads of Comparative Example 1 and Examples 1 to 4, respectively.

Referring to FIG. 9, the thermal barrier pad of Comparative Example 1 maintained a surface temperature of 100°C and then showed a rapid temperature rise at a point slightly exceeding 150 seconds.

Meanwhile, the thermal barrier pads of Examples 1 to 3 maintained a surface temperature of 100°C and then showed a rapid temperature rise at a point exceeding 240 to 280 seconds. Therefore, it can be seen that the thermal barrier pads of Examples 1 to 3 have superior endothermic and insulation performance compared to the thermal barrier pad of Comparative Example 1.

Also, the thermal barrier pad of Example 4 maintained a surface temperature of 100°C and then gradually increased in temperature at a point exceeding about 300 seconds, and was observed to be maintained at 150°C or below even until 500 seconds. That is, the thermal barrier pad of Example 4 was observed to have superior endothermic and insulation performance compared to the thermal barrier pad of Comparative Example 1 as well as the thermal barrier pads of Examples 1 to 3.

### <Example 5>

A thermal barrier pad was manufactured in the same manner as Comparative Example 1, except that the endothermic solution composition included 1 wt.% of CMC as a thickening agent, 0.3 wt.% of PDMS as a surfactant, and 20 wt.% of CaCl₂ as an antifreeze agent.

### <Example 6>

A thermal barrier pad was manufactured in the same manner as Comparative Example 1, except that the endothermic solution composition included 1 wt.% of CMC as a thickening agent, 0.3 wt.% of PDMS as a surfactant, and 15 wt.% of CaCl₂ as an antifreeze agent.

### <Example 7>

A thermal barrier pad was manufactured in the same manner as Comparative Example 1, except that the endothermic solution composition included 1 wt.% of CMC as a thickening agent, 0.3 wt.% of PDMS as a surfactant, and 10 wt.% of CaCl₂ as an antifreeze agent.

### <Example 8>

A thermal barrier pad was manufactured in the same manner as Comparative Example 1, except that the endothermic solution composition included 2 wt.% of CMC as a thickening agent, 0.25 wt.% of PDMS as a surfactant, and 15 wt.% of CaCl₂ as an antifreeze agent.

### <Example 9>

A thermal barrier pad was manufactured in the same manner as Comparative Example 1, except that the endothermic solution composition included 2.5 wt.% of CMC as a thickening agent, 0.25 wt.% of PDMS as a surfactant, and 15 wt.% of CaCl₂ as an antifreeze agent.

### <Comparative Example 2>

A thermal barrier pad was manufactured in the same manner as Comparative Example 1, except that the endothermic solution composition included 0.2 wt.% of CMC as a thickening agent and 0.25 wt.% of PDMS as a surfactant.

### <Comparative Example 3>

A thermal barrier pad was manufactured in the same manner as Comparative Example 1, except that the endothermic solution composition included 8 wt.% of CMC as a thickening agent, 0.3 wt.% of PDMS as a surfactant, and 10 wt.% of CaCl₂ as an antifreeze agent.

### <Comparative Example 4>

A thermal barrier pad was manufactured in the same manner as Comparative Example 1, except that the endothermic solution composition included 1 wt.% of CMC as a thickening agent and 0.1 wt.% of PDMS as a surfactant.

### <Comparative Example 5>

A thermal barrier pad was manufactured in the same manner as Comparative Example 1, except that the endothermic solution composition included 2 wt.% of CMC as a thickening agent and 0.5 wt.% of PDMS as a surfactant.

Endothermic duration was measured for each of the thermal barrier pads manufactured in Examples 1 to 9 and Comparative Examples 1 to 5. The endothermic duration was defined as the time interval between the point when the temperature of one side of the thermal barrier pad reached 100°C and the point when it reached 150°C.

To raise the temperature of the thermal barrier pads manufactured in Examples 1 to 9 and Comparative Examples 1 to 5, heating was performed with a torch through a stainless steel plate interposed on one side of the thermal barrier pad. The temperature of the thermal barrier pad was measured by inserting a thermocouple between the thermal barrier pad and the stainless steel plate.

The endothermic duration measured as described above is summarized in Table 1.

**[Table 1]**

| | water (wt.%) | thickening agent (wt.%) | surfactant (wt.%) | antifreeze agent (wt.%) | endothermic duration (sec) |
|---|---|---|---|---|---|
| Comparative Example 1 | 100 | 0 | 0 | 0 | 115 |
| Example 1 | 99.25 | 0.5 | 0.25 | 0 | 205 |
| Example 2 | 98.75 | 1 | 0.25 | 0 | 170 |
| Example 3 | 97.75 | 2 | 0.25 | 0 | 240 |
| Example 4 | 73.7 | 1 | 0.3 | 25 | 380 |
| Example 5 | 78.7 | 1 | 0.3 | 20 | 395 |
| Example 6 | 83.7 | 1 | 0.3 | 15 | 350 |
| Example 7 | 88.7 | 1 | 0.3 | 10 | 275 |
| Example 8 | 82.75 | 2 | 0.25 | 15 | 310 |
| Example 9 | 82.25 | 2.5 | 0.25 | 15 | 280 |
| Comparative Example 2 | 99.55 | 0.2 | 0.25 | 0 | 120 |
| Comparative Example 3 | 81.7 | 8 | 0.3 | 10 | 145 |
| Comparative Example 4 | 98.9 | 1 | 0.1 | 0 | 135 |
| Comparative Example 5 | 97.5 | 2 | 0.5 | 0 | 155 |

When the thickening agent was not included (Comparative Example 1) or included in too small amounts (Comparative Example 2), leakage of the endothermic solution composition was observed.

When the thickening agent was included excessively (Comparative Example 3), no leakage of the endothermic solution composition was observed. Also, in this case, the endothermic duration was not significantly improved. Although the present disclosure is not limited by any particular theory, it is understood that when the content of the thickening agent is excessive, the tension formed at the interface between the endothermic solution composition and the insulation absorbing material increases excessively, thereby limiting the endothermic and insulation performance of the thermal barrier pad.

Even when the content of the surfactant was too low (Comparative Example 4), the endothermic duration was not improved. Although the present disclosure is not limited by any particular theory, this is also presumed to be due to excessive tension formed at the interface between the endothermic solution composition and the insulation absorbing material because the content of the surfactant is too low.

Even when the content of the surfactant was too high (Comparative Example 5), the endothermic duration was not improved. Comparing Example 3 and Comparative Example 5, the surfactant concentrations are 0.25 wt.% and 0.5 wt.%, respectively, and other conditions are nearly identical. The fact that the endothermic duration of Example 3 is significantly longer than that of Comparative Example 5 indicates that an optimal surfactant concentration range exists.

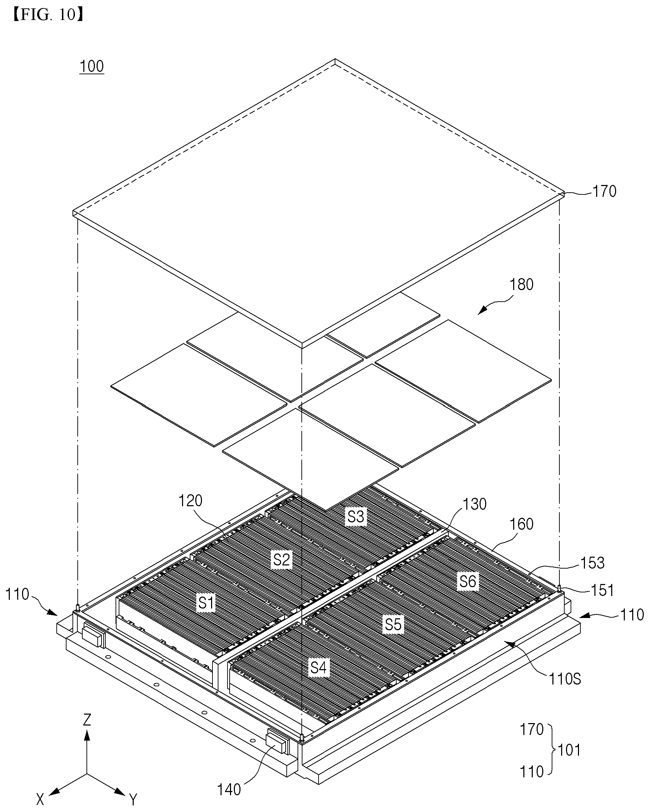

FIG. 10 is a perspective view of a battery pack 100a according to another embodiment of the present disclosure. The battery pack 100a of the embodiment shown in FIG. 10 differs from the battery pack 100 shown in FIG. 1 in the size and number of thermal barrier pads 180. Therefore, the following description will focus on these differences and omit description of overlapping parts.

Referring to FIG. 10, one thermal barrier pad 180 may correspond to each battery cell stack (S1, S2, ..., S6). In this case, replacement of damaged parts is possible for each compartment space 119d (refer to FIG. 2), so maintenance may be easy.

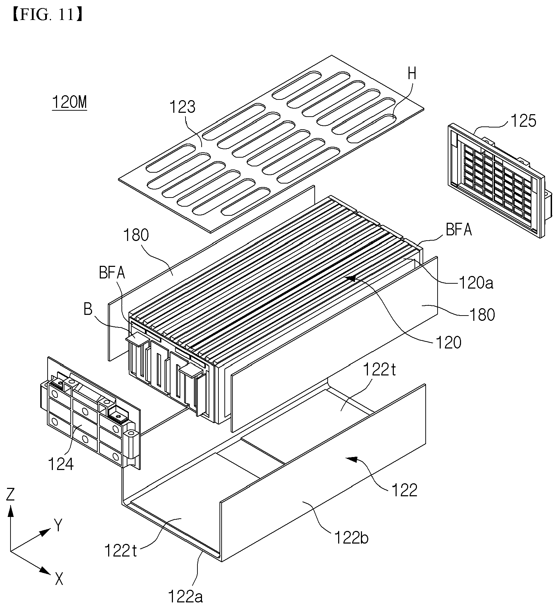

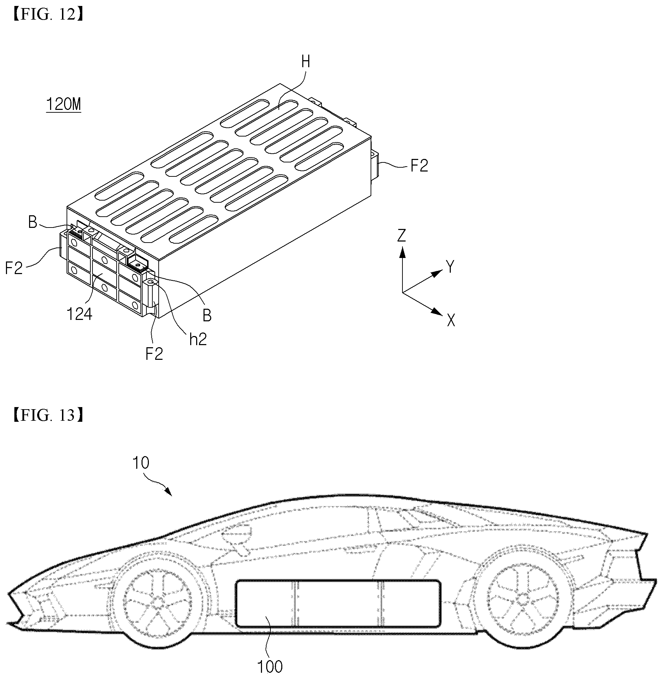

FIG. 11 is an exploded perspective view of a battery module 120M according to an embodiment of the present disclosure. FIG. 12 is a perspective view of a battery module 120M according to an embodiment of the present disclosure.

Referring to FIG. 11 and FIG. 12, the battery module 120M may include battery cells 120, a module case 122, 123 accommodating the battery cells 120, and end plates 124, 125 coupled to the front and rear surfaces of the module case 122, 123.

In some embodiments, the battery cells 120 may be, for example, a plurality of pouch-type battery cells 120a stacked. In some embodiments, the battery cells 120 may be a plurality of prismatic battery cells stacked.

In some embodiments, second thermal barrier pads 181 may be provided at both ends of the battery cells 120 in the first direction (X-axis direction). Since the specific configuration of the second thermal barrier pad 181 has been described with reference to FIG. 5 and FIG. 6, redundant description will be omitted here. In some embodiments, the second thermal barrier pad 181 may also be provided between the plurality of battery cells 120.

In some embodiments, the module case 122, 123 may include a lower case 122 and an upper case 123. In FIG. 11, a U-shaped frame having both side plates 122b and a bottom plate 122a is shown as the lower case 122, but those skilled in the art will understand that other forms of lower case 122 may be applied. The form of the module case 122, 123 is not limited to that disclosed in FIG. 11, and other forms of module cases may be applied as long as they can stably accommodate the battery cells 120.

A busbar frame (BFA) may be coupled to the front and rear surfaces of the battery cells 120. Busbars (B) connecting electrode leads of battery cells and busbars B for electrical connection to other battery modules or externally may be installed in the busbar frame BFA.

In some embodiments, a front end plate 124 and a rear end plate 125 for protecting the busbar frame BFA and battery cells 120 may be located at the front and rear surfaces of the battery cells 120. The front end plate 124 and rear end plate 125 may be coupled to the module case 122, 123 and/or the busbar frame BFA.

In some embodiments, the module case 122, 123 may have a venting hole H for gas discharge within the module. In some embodiments, the upper case 123 may have a venting hole H.

A TIM layer 122t containing thermal resin may be disposed on the bottom plate 122a of the lower case 122. The TIM layer 122t on the bottom plate 122a may fix the battery cells 120 on the bottom plate 122a. Furthermore, the TIM layer 122t may transfer heat generated from the battery cells 120 to the bottom plate 122a of the lower case 122.

In some embodiments, an additional TIM layer (not shown) may be further provided on the inner surface of the upper case 123. That is, an additional TIM layer may be disposed between the upper case 123 and the upper surface of the battery cells 120.

The battery cells 120 are mounted on the U-shaped frame lower case 122, and the upper case 123 is coupled to the lower case 122 by welding or the like, so that the battery cells 120 can be accommodated within the module case 122, 123. In some embodiments, at least one second thermal barrier pad 181 may be provided between the battery cells 120. Second thermal barrier pads 181 may be provided at both ends of the battery cells 120 accommodated in the module case 122, 123 in the first direction (e.g., X-axis direction). In this case, the second thermal barrier pad 181 may directly contact the side plate 122b of the lower case 122.

The front end plate 124 and rear end plate 125 are coupled with the busbar frame BFA interposed between the front and rear surfaces of the battery cells 120, thereby completing the battery module as shown in FIG. 12. Heat transferred to the thermal barrier structure 128 may be transferred to the pack housing 101 through the lower case 122 and/or the upper case 123.

In some embodiments, at least one of the upper case 123 and the lower case 122 may be equipped with a cooling device. In some embodiments, the upper case 123 may include two plates coupled with a gap, and a cooling channel may be provided in the gap portion. In some embodiments, the bottom plate 122a may include two plates coupled with a gap, and a cooling channel may be provided in the gap portion.

In some embodiments, the battery module 120M may have a coupling part F2 for coupling to a corresponding structure within the battery pack 100. In some embodiments, coupling parts F2 having fastening holes h2 may be provided on both sides of the end plates 124, 125 of the battery module 120M for coupling to the structure for supporting the battery module 120M.

A plurality of the battery modules 120M may be disposed within the battery pack 100.

As in the battery module 120M shown in FIG. 11 and FIG. 12, when the lower case 122 is equipped with a TIM layer 122t, the bottom plate 122a side of the lower case 122 may be coupled to the plate part 110P of the lower case 110 of the battery pack 100. In some embodiments, a thermal barrier pad 180 may be provided instead of the TIM layer 122t.

Since the second thermal barrier pads 181 are disposed at both ends of the battery cells 120 accommodated within the module case 122, 123, thermal events occurring in a specific battery module 120M can be effectively prevented or delayed from transferring to other neighboring battery modules 120M.

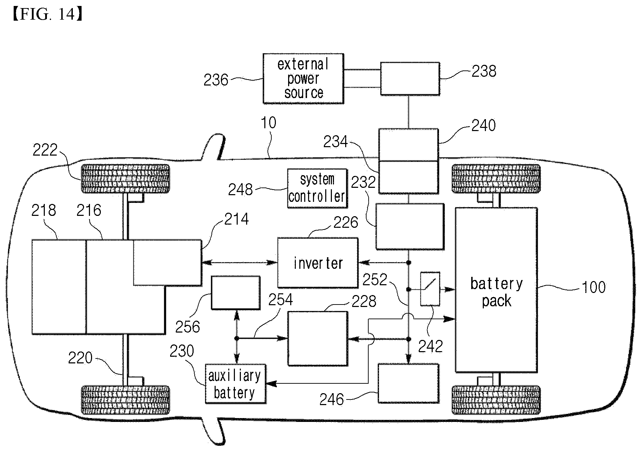

FIG. 13 is a side view schematically illustrating an electrified vehicle 10 according to an embodiment of the present disclosure. FIG. 14 is a schematic diagram conceptually illustrating a battery pack 100 mounted in the electrified vehicle 10 and other components thereof.

Referring to FIG. 13 and FIG. 14, the electrified vehicle 10 according to an embodiment of the present disclosure may include at least one or more battery packs 100. The electrified vehicle 10 may include, for example, a vehicle body having an accommodation space for accommodating at least the battery pack 100. For example, the electrified vehicle 10 may be a battery electric vehicle (BEV), a plug-in hybrid electric vehicle (PHEV), or a full hybrid electric vehicle (FHEV).

The electrified vehicle 10 may include one or more electrical machines 214 mechanically coupled to one or more gear boxes or hybrid transmissions 216. The electrical machine 214 may operate as a motor or generator. Also, when the electrified vehicle 10 is a PHEV or FHEV, the electrified vehicle 10 may include an engine 218, and the hybrid transmission 216 may be mechanically coupled to the engine 218.

Also, the hybrid transmission 216 may be mechanically coupled to a drive shaft 220 mechanically coupled to wheels 222. The electrical machine 214 may propel or decelerate according to the on/off of the engine 218, or may act as a generator to recover energy. The electrical machine 214 may enable the engine 218 to operate at a more efficient speed to reduce exhaust gases and allow the electrified vehicle 10 to turn off the engine 218 and operate in electric mode under specific conditions. When the electrified vehicle 10 is a BEV, the engine 218 is omitted.

The battery pack 100 stores energy used by the electrical machine 214 and has been described with reference to FIG. 1 to FIG. 12, so redundant description will be omitted. The battery pack 100 may provide high voltage direct current (DC) output. The contactor module 242 may include one or more contactors configured to separate the battery pack 100 from the high voltage bus 252 by opening and connect the battery pack 100 to the high voltage bus 252 when closed.

One or more inverters 226 may be electrically connected to the high voltage bus 252. The inverter 226 is also connected to the electrical machine 214 and can transfer energy bidirectionally between the battery pack 100 and the electrical machine 214. For example, the battery pack 100 may provide DC voltage while the electrical machine 214 operates with three-phase alternating current. The inverter 226 may convert the DC voltage to three-phase AC current for the electrical machine 214 to operate. In regenerative mode, the inverter 226 may convert three-phase AC current from the electrical machine 214 to DC voltage applicable to the battery pack 100.

In some embodiments, the battery pack 100 may provide energy for other electrical systems of the vehicle in addition to energy for vehicle propulsion. The electrified vehicle 10 may include a DC/DC converter module 228, and the DC/DC converter module 228 converts high voltage DC output from the high voltage bus 252 to a low voltage DC level of the low voltage bus 254 compatible with low voltage loads 256. The output of the DC/DC converter module 228 may be electrically connected to an auxiliary battery 230 (e.g., 12V battery) to charge the auxiliary battery 230. The low voltage load 256 may be electrically connected to the auxiliary battery 230 through the low voltage bus 254. One or more high voltage loads 246 may be connected to the high voltage bus 252. The high voltage loads 246 may be, for example, fans, electric heating elements, and/or air conditioner compressors.

The electrified vehicle 10 may be configured to recharge the battery pack 100 with an external power source 236. In some embodiments, the external power source 236 may be electrically connected to electric vehicle supply equipment (EVSE) 238. The external power source 236 may supply DC or AC power to the EVSE 238, and the EVSE 238 may include circuits that manage and control energy transfer between the external power source 236 and the electrified vehicle 10.

The EVSE 238 may include a charging connector 240 that can be connected to a charging port 234 of the electrified vehicle 10. The charging port 234 may be any port capable of transmitting power from the EVSE 238 to the electrified vehicle 10. The charging port 234 may be electrically connected to a power conversion module 232. The power conversion module 232 processes power from the EVSE 238 and converts it to voltage and current levels suitable for the battery pack 100.

In some embodiments, the battery pack 100 may be electrically connected to the auxiliary battery 230. The auxiliary battery 230 may be configured to supply power necessary to perform some functions of the battery pack 100.

All functions of the electrified vehicle 10 described above may be controlled by a system controller 248.

As above, although embodiments of the present disclosure have been described in detail, a person of ordinary skill in the art to which the present disclosure belongs will be able to implement the present disclosure in various modifications without departing from the spirit and scope of the present disclosure as defined in the appended claims. Therefore, further modifications of embodiments of the present disclosure will not depart from the technology of the present disclosure.

## Claims

1. A thermal barrier pad, comprising:
a porous insulation absorbing material having a first main surface and a second main surface;
an endothermic solution composition absorbed in the insulation absorbing material;
a heat conductive sheet covering at least one of the first main surface and the second main surface of the insulation absorbing material; and
a heat dissipating pouch surrounding the insulation absorbing material and the heat conductive sheet and comprising a metal layer,
wherein the endothermic solution composition comprises:
about 0.20 wt.% to about 0.45 wt.% of a surfactant;
about 0.3 wt.% to about 5.0 wt.% of a thickening agent; and
about 60 wt.% to about 80 wt.% of water.

2. The thermal barrier pad of claim 1, wherein the thickening agent comprises carboxymethyl cellulose (CMC), carboxyethyl cellulose, polyvinyl alcohol (PVA), starch, polyethylene oxide (PEO), hydroxymethyl cellulose, hydroxyethyl cellulose, hydroxypropyl cellulose, or glucomannan.

3. The thermal barrier pad of claim 1, wherein the endothermic solution composition comprises about 15 wt.% to about 35 wt.% of an antifreeze agent.

4. The thermal barrier pad of claim 3, wherein the antifreeze agent comprises CaCl₂, NaCl, potassium acetate, potassium formate, isopropanol, butyl diglycol, ethylene glycol, diethylene glycol, dipropylene glycol, propylene glycol, urea, and/or glycerol.

5. The thermal barrier pad of claim 3, wherein the endothermic solution composition comprises about 20 wt.% to about 30 wt.% of the antifreeze agent.

6. The thermal barrier pad of claim 3, wherein the endothermic solution composition comprises about 23 wt.% to about 27 wt.% of the antifreeze agent.

7. The thermal barrier pad of claim 1, wherein the endothermic solution composition comprises about 0.5 wt.% to about 3 wt.% of the thickening agent.

8. The thermal barrier pad of claim 1, wherein the endothermic solution composition comprises about 1 wt.% to about 2.2 wt.% of the thickening agent.

9. The thermal barrier pad of claim 1, wherein the surfactant is a silicone (Si)-based surfactant.

10. The thermal barrier pad of claim 9, wherein the surfactant comprises polydimethylsiloxane (PDMS).

11. The thermal barrier pad of claim 1, wherein the heat conductive sheet comprises copper, aluminum, zinc, tin, iron, or alloys thereof.

12. The thermal barrier pad of claim 11, wherein the heat conductive sheet is a copper sheet or a copper alloy sheet and has a thickness of about 5 µm to about 50 µm.

13. The thermal barrier pad of claim 1, wherein the insulation absorbing material comprises a non-woven having silica fiber as a main component.

14. A battery pack, comprising:
a pack case;
a plurality of secondary batteries accommodated in the pack case and stacked in a first direction; and
the thermal barrier pad of claim 1 provided between the plurality of secondary batteries.

15. A battery module, comprising:
a module case;
a plurality of secondary batteries accommodated in the module case and stacked in a first direction; and
the thermal barrier pad of claim 1 provided between the plurality of secondary batteries.
